# EUROPÄISCHE PATENTSCHRIFT

(11) **EP 1 489 427 B1**
(45) Veröffentlichungstag und Bekanntmachung des Hinweises auf die Patenterteilung: **12.11.2008**
(21) Anmeldenummer: 04013839.8
(22) Anmeldetag: 12.06.2004
(51) Int. Cl.: G01P 5/06

(54) **Selektives Messen einer Richtungskomponente der Strömungsgeschwindigkeit mit einem Schalensternanemometer**
Selective measurement of a directional component of the flow velocity using a cup anemometer
Mesure sélective d'une composante directionnelle de la vitesse d'écoulement en utilisant un anémomètre du type moulinet à coupelles

(30) Priorität: 20.06.2003 DE 10327632
(43) Veröffentlichungstag der Anmeldung: 22.12.2004
(73) Patentinhaber: Adolf Thies GmbH & Co. KG, 37025 Göttingen (DE)
(72) Erfinder: Westermann, Dieter, 26842 Ostrhauderfehn (DE)
(74) Vertreter: Rehberg Hüppe + Partner

(56) Entgegenhaltungen:
- WO-A-02/29420
- DE-U- 29 707 455
- FR-A- 2 041 284
- US-A- 3 541 855
- US-A- 4 548 074
- VELTKAMP R: "ANEMOMETER BASED ON HALL-EFFECT SENSOR" ELEKTOR ELECTRONICS, ELEKTOR PUBLISHERS LTD. CANTERBURY, GB, Bd. 24, Nr. 272, Dezember 1998 (1998-12), Seiten 14-17, XP000889300 ISSN: 0268-4519

## Beschreibung

Die Erfindung betrifft ein Verfahren nach dem Oberbegriff des Patentanspruchs 1 zum Messen einer Strömungsgeschwindigkeit, insbesondere von Wind, mit einem Schalensternanemometer.

### STAND DER TECHNIK

Mit dem Begriff Windgeschwindigkeit wird in der Meteorologie und in der Windenergietechnik die Horizontalkomponente des Windes bezeichnet. In realen Windfeldern treten immer auch Vertikalkomponenten des Winds auf. Diese werde durch Turbulenzen und strukturiertes Gelände verursacht. Anemometer, die zur Messung der Windgeschwindigkeit verwendet werden, sollen nur die Horizontalkomponente des Winds erfassen, d.h. von etwaigen Vertikalkomponenten des Winds unbeeinflusst sein.

Als Anemometer zum Messen der Windgeschwindigkeit sind Schalensternanemometer bekannt. Alle bekannten Schalensternanemometer zeigen bei einer Anströmung unter Schrägwinkeln zu der Rotationsebene ihres Schalensterns jedoch eine deutliche Abweichung bei der Rotationsgeschwindigkeit des Schalensterns, weil diese durch die senkrecht zu der Rotationsebene verlaufende Richtungskomponente der Anströmung in unerwünschter Weise erhöht wird. Die resultierenden systembedingten Messfehler können in turbulenten Windfeldern einige Prozentpunkte erreichen, was mit den Ansprüchen an die Genauigkeit bei der Messung der Windgeschwindigkeit nicht vereinbar ist.

Ein Verfahren zum Messen einer Strömungsgeschwindigkeit, insbesondere von Wind, mit einem Schalensternanemometer und ein hierzu geeignetes Schalensternanemometer sind aus der WO 02/29420 bekannt. Hier wird das Ziel verfolgt, ein Schalensternanemometer so auszubilden, dass die Rotationsgeschwindigkeit seines Schalensterns nicht von Schrägwinkeln abhängt, unter denen Wind auf die Rotationsebene des Schalensterns auftrifft. D.h., es soll der Betrag der Geschwindigkeit des Winds gemessen werden, der identisch ist mit dem Betrag der Resultierenden aus der Vertikalkomponente und der Horizontalkomponente des Winds. Die Unabhängigkeit der Rotationsgeschwindigkeit des bekannten Schalensternanemometers von dem Schrägwinkel zwischen der Anströmung und der Rotationsebene des Schalensterns wird durch eine spezielle Formgebung der Anemometerschalen des Schalensternanemometers erreicht. Bei relativ großen Schrägwinkeln der Anströmung zu der Rotationsebene des Schalensterns werden auch hierbei tendenziell zu große Rotationsgeschwindigkeiten beobachtet, die einen größeren Betrag der Geschwindigkeit des Winds vortäuscht, als er tatsächlich vorhanden ist. Als Gegenmaßnahme wird in den Anemometerschalen des bekannten Schalensternanemometers an deren Grund ein in der Rotationsebene des Schalensterns orientierter Steg angeordnet, der das Antriebsmoment auf den Schalenstern für große negative und positive Schrägwinkel reduzieren und so die bei diesen Schrägwinkeln der Anströmung tendenziell zu hohen Rotationsgeschwindigkeiten des Schalensternanemometers reduzieren soll. Die Messung des Betrags der Geschwindigkeit des Windes ist jedoch tatsächlich für Anwendungen im Bereich der Meteorologie und der Windenergietechnik von deutlich geringerem Interesse als die selektive Messung der Horizontalkomponente des Windes.

Ein weiteres Verfahren zum Messen einer Strömungsgeschwindigkeit, insbesondere von Wind ist, Saus der US 3,541,855 A bekannt. Um bei Anströmungen des bekannten Schalensternanemometers unter einem Schrägwinkel zu der Rotationsebene des Schalensterns von bis zu 20° eine maximale Abweichung der aufgrund der Rotationsgeschwindigkeit des Schalensterns gemessenen Strömungsgeschwindigkeit von der Richtungskomponente der Strömungsgeschwindigkeit in der Rotationsebene von 1% zu realisieren, ist ein zweiter Schalenstern vorgesehen, der mit dem ersten Schalenstern um dieselbe Rotationsachse, d.h. in einer parallelen Rotationsebene umläuft. Hierdurch wird die Baugröße des Schalensternanemometers erheblich erhöht.

Aus der DE 297 07 455 U1 ist ein Schalensternanemometer mit einem mehrere Anemometerschalen aufweisenden Schalenstern bekannt, bei dem die Anemometerschalen an Haltearmen in Form von Lamellen gelagert sind. Bei den Lamellen ist jeder Querschnitt im selben Sinne relativ zu einer Rotationsebene des Schalensterns derart geneigt, dass die Haltearme einen Propeller bilden und auf diese Weise die Empfindlichkeit des Flügelrades gegenüber einer vertikalen Windkomponente parallel zu der Rotationsachse des Schalensterns erhöhen.

Aus Veltkamp R: "Anemoter based on Hall-Effect Sensosor" Elektor Electronics, Elektor Publishers Ltd. Canterbury, GB, Band 24 Nr. 272, Dezember 1998 (1998-12, S. 14-17, XP 000889300 ISN: 0268-4519) ist ein Schalenstemanemometer mit einem drei Anemometerschalen aufweisenden Schalenstern bekannt, bei dem die Haltearme für alle drei Anemometerschalen durch einen plattenförmigen Körper ausgebildet werden. Der plattenförmige Körper weist etwa die Abmessungen eines gleichseitigen Dreiecks auf, das zu seinen Ecken hin verjüngt und dabei um einen Teilbereich der konvexen Seiten der Anemometerschalen herum gebogen ist, um diese flächig abzustützen.

Ein Verfahren mit den Merkmalen des Oberbegriffs des Patent anspruchs 1 ist aus der FR-A-2041284 bekannt.

Grundsätzlich können mit einem Verfahren nach dem Oberbegriff des Anspruchs 1 auch Strömungsgeschwindigkeiten in anderen Medien gemessen werden. Dabei kann es sich sowohl um Gasströmungen als auch um Strömungen in Flüssigkeiten handeln.

### AUFGABE DER ERFINDUNG

Der Erfindung liegt die Aufgabe zugrunde, ein Verfahren nach dem Oberbegriff des Patentanspruchs 1 nach dem auch bei geringer Baugröße des Schalensternanemometers selektiv eine Richtungskomponente einer Strömungsgeschwindigkeit, insbesondere die Horizontalkomponente von Wind, d.h. die Windgeschwindigkeit, messbar ist.

### LÖSUNG

Die Aufgabe der Erfindung wird erfindungsgemäß durch ein Verfahren mit den Merkmalen des Patentanspruchs 1 gelöst. Vorteilhafte Ausführungsform des neuen Verfahrens sind in den abhängigen Ansprüchen 2 bis 4.

### BESCHREIBUNG DER ERFINDUNG

Bei der Erfindung wird der strömungsdynamische Widerstand des Schalensterns des Schalensternanemometers für Anströmungen unter Schrägwinkeln zu der Rotationsebene des Schalensterns bis mindestens +/- 15° so erhöht, dass sich bei diesen Schrägwinkeln eine maximale Abweichung der aufgrund der Rotationsgeschwindigkeit des Schalensterns gemessenen Strömungsgeschwindigkeit von der Richtungskomponente der Strömungsgeschwindigkeit in der Rotationsebene von maximal 2 % ergibt. Die Erfindung nutzt die Erhöhung des aerodynamischen Widerstands des Schalenstern in einem Bereich kleiner Schrägwinkel der Anströmung zu der Rotationsebene aus, um das Ziel der selektiven Messung der Richtungskomponente der Strömungsgeschwindigkeit der Anströmung in der Rotationsebene zu erreichen. Tatsächlich ist es auf diese Weise auch bei Anströmungen unter Schrägwinkeln von bis zu +/- 20° möglich, den Fehler bei der Messung der Richtungskomponente der Strömungsgeschwindigkeit der Anströmung in der Rotationsebene auf maximal 1 % zu begrenzen. Um bei relativ kleinen Schrägwinkeln der Anströmung eine effektive und gleichzeitig angemessene Erhöhung des aerodynamischen Widerstands des Schalensterns zu erreichen, wird der kleinere Strömungswiderstandsbeiwert der konvexen Seiten der Anemometerschalen für Anströmungen unter den Schrägwinkeln erhöht.

Hierzu werden an der konvexen Seite der Anemometerschalen oder ihrer Haltearme strömungsdynamischen Widerstand erzeugende Elemente vorgesehen, die bei Anströmungen unter den Schrägwinkeln als strömungsdynamische Bremsen wirken. Beispielsweise können an der konvexen Seite der Anemometerschalen oder ihrer Haltearme in der Rotationsebene ausgerichtete Widerstandsflächen angebracht sein.

Die vorliegende Erfindung ist unabhängig von der Grundform der Anemometerschalen des Schalensterns und auch der konkreten Anzahl der Anemometerschalen des Schalensterns. Sie ist beispielsweise in Verbindung mit kugelschalförmigen, kegelmantelförmigen und kegelstumpfmantelförmigen Anemometerschalen anwendbar.

Die Erfindung kann auch gemeinsam mit einer leichten Anstellung der Anemometerschalen zu der Rotationsebene des Schalensterns kombiniert werden, um eine Asymmetrie bei der Rotationsgeschwindigkeit des Schalensterns in Abhängigkeit von der Richtung des Schrägwinkels auszugleichen, die aufgrund des Gesamtaufbaus des Schalensternanemometers auf beiden Seiten der Rotationsebene des Schalensterns auftreten kann. Statt eines kleinen Anstellwinkels der Anemometerschalen des Schalensterns können auch die strömungsdynamischen Widerstand erzeugenden Elemente unter einem kleinen Winkel von weniger als 3° zu der Rotationsebene des Schalensterns angestellt werden, um diese Asymmetrie zu kompensieren.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Ansicht von oben auf eine Anemometerschale mit dem zugehörigen Haltearm einer ersten Ausführungsform des Schalensternanemometers für das neue Messverfahren.
- **Fig. 2**: zeigt eine Ansicht der Anemometerschale und des Tragarms gemäß Fig. 1 von vorne.
- **Fig. 3**: skizziert einen Abschattungseffekt bei der Anströmung der Anemometerschalen eines Schalensterns eines Schalensternanemometers unter Schrägwinkeln zu seiner Rotationsebene.
- **Fig. 4**: zeigt eine Ansicht von oben auf eine Anemometerschale mit dem zugehörigen Haltearm einer zweiten Ausführungsform des Schalensternanemometers für das neue Messverfahren.
- **Fig. 5**: zeigt eine Ansicht von oben auf eine Anemometerschale mit dem zugehörigen Haltearm einer dritten Ausführungsform des Schalensternanemometers für das neue Messverfahren.
- **Fig. 6**: zeigt eine Ansicht von oben auf eine Anemometerschale mit dem zugehörigen Haltearm einer vierten Ausführungsform des Schalensternanemometers für das neue Messverfahren.
- **Fig. 7**: zeigt eine Auftragung der relativen Rotationsgeschwindigkeit verschiedener Schalensternanemometer in Abhängigkeit von den Schrägwinkeln ihrer Anströmung bei festem Betrag der Strömungsgeschwindigkeit der Anströmung.

### FIGURENBESCHREIBUNG

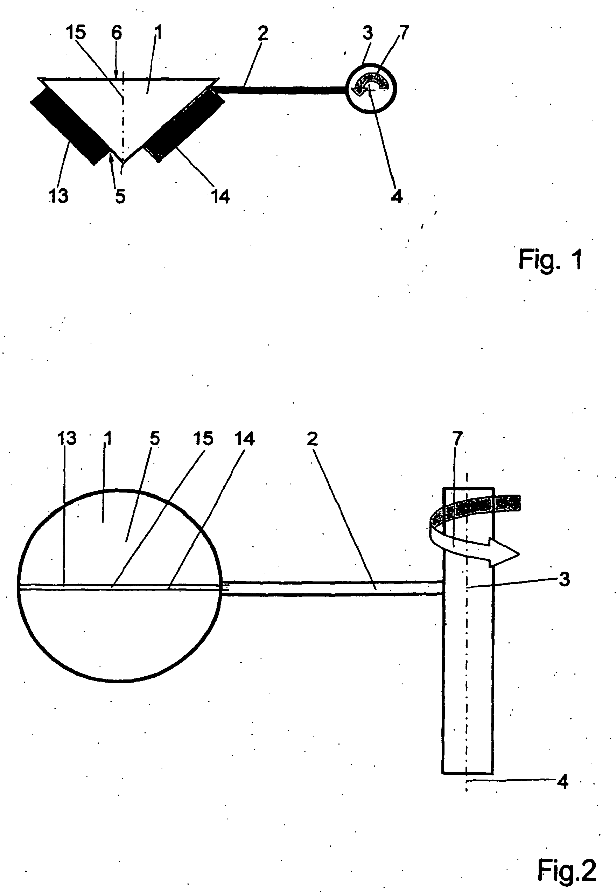

**Fig. 1** zeigt eine Anemometerschale 1 eines Schalensternanemometers, die über einen Tragarm 2 an einer Nabe 3 gelagert ist. Typischerweise sind in gleichen Winkelabständen insgesamt drei solcher Anemometerschalen und Tragarme an der Nabe 3 befestigt und bilden einen Schalenstern aus. Der gesamte Schalenstern ist in einer mit der Zeichenebene der Fig. 1 zusammenfallenden Rotationsebene um eine Rotationsachse 4 frei drehbar gelagert. Durch eine Anströmung des Schalensterns quer zu der Rotationsachse 4 wird der Schalenstern in Rotation versetzt, weil die konvexen Seiten 5 der Anemometerschalen 1 einen kleineren Luftwiderstandsbeiwert aufweisen als die konkaven Seiten 6. Hieraus resultiert eine feste Drehrichtung 7 des Schalensterns unabhängig von der Richtung seiner Anströmung, und die Rotationsgeschwindigkeit des Schalensterns um die Rotationsachse 4 ist ein Maß für die Strömungsgeschwindigkeit seiner Anströmung. D.h. für jede bestimmte Anströmung des Schalensterns stellt sich eine zugehörige feste Rotationsgeschwindigkeit des Schalensterns um die Rotationsachse 4 ein.

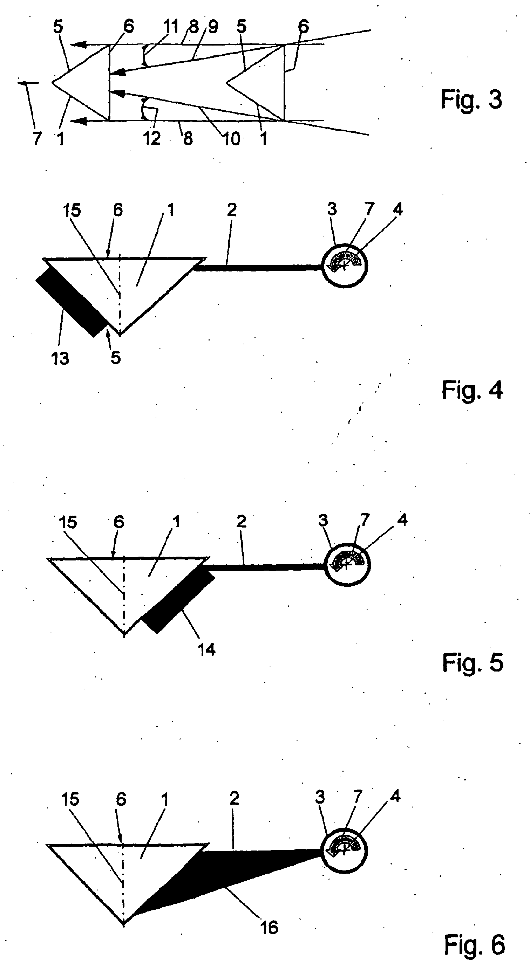

Dabei ist es erwünscht, wenn die Rotationsgeschwindigkeit des Schalensterns ausschließlich von der Richtungskomponente der Strömungsgeschwindigkeit der Anströmung des Schalensterns abhängt, die in der Rotationsebene des Schalensterns verläuft. Tatsächlich ist es aber so, dass bei Schrägwinkeln zwischen der Anströmung und der Rotationsebene des Schalenstern und gleichbleibendem Betrag der Strömungsgeschwindigkeit der Anströmung häufig nicht etwa abnehmende, sondern sogar zunehmende Rotationsgeschwindigkeiten des Schalensterns beobachtet werden. Dies ist zumindest teilweise auf einen Abschattungseffekt zurückzuführen, der in Fig. 3 skizziert ist. Fig. 3 zeigt schematisch zwei bei der Drehung des Schalenstern im selben Volumen aufeinanderfolgende Anemometerschalen 1, wobei die Drehrichtung 7 in die Zeichenebene abgewickelt ist. Eine Anströmung des Schalensterns in seiner Rotationsebene ist dabei durch Pfeile 8 skizziert, die deutlich werden lassen, dass die in der Drehrichtung 7 vorlaufende Anemometerschale 1 durch die nachlaufende Anemometerschale 1 abgeschattet wird, so dass die Anströmung im wesentlichen nur die hintere Anemometerschale 1 beschleunigt. Anders ist es im Fall einer durch einen Pfeil 9 skizzierten Anströmung von oberhalb der Rotationsebene bzw. einer durch einen Pfeil 10 skizzierten Anströmung von unterhalb der Rotationsebene, die durch Schrägwinkel 11 und 12 zu der Rotationsebene gekennzeichnet sind. Bei diesen Anströmungen unter den Schrägwinkeln 11 und 12 entfällt die Abschattung der vorlaufenden Anemometerschale 1 gegenüber der nachlaufenden Anemometerschale 1 zu wesentlichen Anteilen, so dass beide aufeinanderfolgenden Anemometerschalen von der Anströmung beschleunigt werden.

Um diese Zusätzliche unerwünschte Beschleunigung des Schalensterns bei seiner Anströmung unter Schrägwinkeln zu vermeiden, so dass seine Rotationsgeschwindigkeit nur von der Richtungskomponente der Strömungsgeschwindigkeit seiner Anströmung in der Rotationsebene abhängt, sind bei dem Ausführungsbeispiel des Schalensternanemometers für das neue Messverfahren gemäß den Fig. 1 und 2 Widerstandsflächen 13 und 14 an der konvexen Seite 5 der Anemometerschalen angebracht. Die Widerstandsflächen 13 und 14 haben eine feste Orientierung in bzw. parallel zu der Rotationsebene des Schalensterns. Die Widerstandsfläche 13 ist dabei in bezug auf die Rotationsachse 4 jenseits der Kegelachse 15 der hier kegelmantelförmigen Anemometerschalen 1 angeordnet, während die Widerstandsfläche 14 diesseits der Kegelachse 15 liegen. Die Widerstandsflächen 13 und 14 sind bei einer Anströmung des Schalensterns in seiner Rotationsebene im Wesentlichen wirkungslos. Bei einer Anströmung unter einem Schrägwinkel zu der Rotationsebene macht sich jedoch eine Erhöhung des Luftwiderstandsbeiwerts der konvexen Seiten 5 der Anemometerschalen 1 bemerkbar, der zu einer Erhöhung des aerodynamischen Widerstands des Schalensterns und damit zu seiner Abbremsung führt. Die Abbremsung kann durch Lage und Größe der Widerstandsflächen so gesteuert werden, dass die Rotationsgeschwindigkeit des Schalensterns auch bei einer Schräganströmung nur der Richtungskomponente seiner Anströmung in der Rotationsebene entspricht.

**Fig. 4** skizziert in einer Fig. 1 entsprechenden Darstellung die Anordnung nur einer äußeren Widerstandsfläche 13 an den Anemometerschalen 1, während **Fig. 5** die Anordnung nur einer inneren Widerstandsfläche 14 an den Anemometerschalen 1 darstellt.

**Fig. 6** zeigt demgegenüber eine Widerstandsfläche 16, welche sich teilweise vor der konvexen Seite 5 der Anemometerschalen 1 erstreckt und teilweise vor dem der jeweiligen Anemometerschale 1 zugeordneten Tragarm 2. Hierdurch kann zugleich eine mechanische Verstärkung des Tragarms 2 erreicht werden. Im Vergleich zu bekannten Tragarmen mit flachem Querschnitt ist die Widerstandsfläche 16 aber sehr viel größer dimensioniert, und sie zeichnet sich dadurch aus, dass mit ihrer Hilfe die Rotationsgeschwindigkeit des Schalensterns seine unerwünschte Abhängigkeit von der Richtungskomponente seiner Anströmung senkrecht zu seiner Rotationsebene verliert.

Zumindest ist die gewünschte Unabhängigkeit der Rotationsgeschwindigkeit des Schalensterns bei dem neuen Schalensternanemometer für Schräganströmungen in einem Bereich von +/- 15°, vorzugsweise von +/-20°, gegeben. Die dabei noch auftretenden Abweichungen der Rotationsgeschwindigkeit des Schalensterns von seiner Rotationsgeschwindigkeit bei einer Anströmung allein mit der Richtungskomponente in seiner Rotationsebene sollte dabei maximal 2 %, besser maximal 1 % nicht überschreiten.

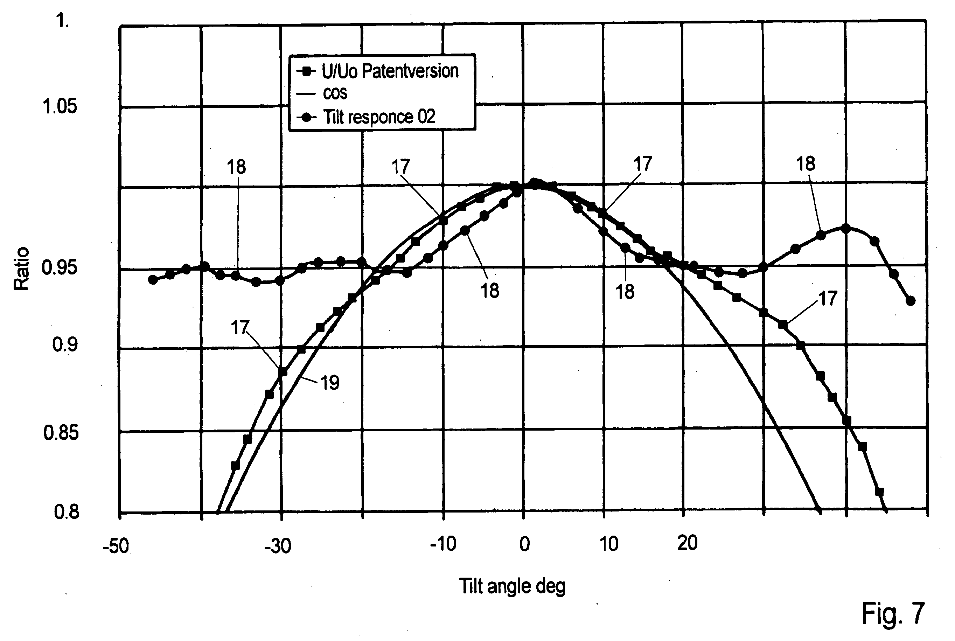

Dass dies realistisch ist, zeigt **Fig. 7**. Hier ist die relative Rotationsgeschwindigkeit ("ratio") über dem Schrägwinkel in Grad ("Tilt angle deg") mit einer Kurve 17 für ein erfindungsgemäßes Verfahren und mit einer Kurve 18 für ein Verfahren nach dem Stand der Technik bei jeweils festem Betrag der Strömungsgeschwindigkeit der Anströmung im Vergleich zu einer Kosinuskurve 19 dargestellt. Die Kosinuskurve 19 markiert den Idealverlauf der relativen Rotationsgeschwindigkeit des Schalensterns in Abhängigkeit von dem Schrägwinkel seiner Anströmung. Die Kurve 17 verläuft mit einem Fehler von nicht mehr als 1 % längs der Kosinuskurve 19 bis zu Schrägwinkeln von -20° und über +20°. Die Kurve 18, die ein sehr hochwertiges Schalensternanemometer aus dem Stand der Technik betrifft, zeigt deutlich stärkere Abweichungen. Gerade in Richtung auf höhere Schrägwinkel steigen die relativen Rotationsgeschwindigkeiten in unerwünschter Weise an. Hierdurch wird eine nach unten vorgegebene Abweichung der Kurve 18 von der Kosinuskurve 19 bei kleineren Schrägwinkeln schnell überkompensiert. Ohne die gewollte Unterschreitung der Kosinuskurve 19 durch die Kurve 18 bei kleineren Schrägwinkeln würde sich noch viel eher das Phänomen zu hoher Rotationsgeschwindigkeiten bei dem Messverfahren bemerkbar machen, das nicht gemäß der Erfindung ausgebildet ist bzw. gemäß der Erfindung zum selektiven Messen nur der Strömungskomponente der Anströmung des Schalensterns in seiner Rotationsebene verwendet wird.

## Patentansprüche

1. Verfahren zum Messen einer Strömungsgeschwindigkeit, insbesondere von Wind, mit einem Schalenstemanemometer, das einen in einer Rotationsebene um eine Rotationsachse(4) verdrehbaren Schalenstern mit mehreren Anemometerschalen (1) aufweist, wobei ein Unterschied der Strömungswiderstandsbeiwerte zwischen den konvexen (5) und konkaven (6) Seiten der Anemometerschalen (1) eingestellt wird, damit der Schalenstern bei einer Anströmung mit einer Richtungskomponente quer zu der Rotationsachse (4) in eine von der Strömungsgeschwindigkeit der Anströmung abhängige Rotationsgeschwindigkeit um die Rotationsachse (4) versetzt wird, wobei die Rotationsgeschwindigkeit als Maß für die Strömungsgeschwindigkeit der Anströmung verwendet wird und wobei strömungsdynamischen Widerstand erzeugende Elemente an den konvexen Seiten (5) der Anemometerschalen (1) oder ihrer Haltearme (2) vorgesehen sind, die bei Anströmungen unter Schrägwinkeln als strömungsdynamische Bremsen wirken, **dadurch gekennzeichnet, dass** die Lage und Größe der strömungsdynamischen Widerstand erzeugenden Elemente so gewählt wird, dass der kleinere Strömungswiderstandsbeiwert der konvexen Seiten (5) der Anemometerschalen (1) für Anströmungen unter den Schrägwinkeln zu der Rotationsebene bis mindestens plus/minus 15 DEG so erhöht wird, dass sich bei diesen Schrägwinkeln eine maximale Abweichung der aufgrund der Rotationsgeschwindigkeit gemessenen Strömungsgeschwindigkeit von der Richtungskomponente der Strömungsgeschwindigkeit senkrecht zu der Rotationsachse von 2 % ergibt.

2. Verfahren nach Anspruch 1, **dadurch gekennzeichnet, dass** die Lage und Größe der strömungsdynamischen Widerstand erzeugenden Elemente so gewählt wird, dass der kleinere Strömungswiderstandsbeiwert der konvexen Seiten (5) der Anemometerschalen (1) für Anströmungen unter den Schrägwinkeln zu der Rotationsebene bis mindestens plus/minus 20 DEG so erhöht wird, dass sich bei diesen Schrägwinkeln eine maximale Abweichung der aufgrund der Rotationsgeschwindigkeit gemessenen Strömungsgeschwindigkeit von der Richtungskomponente der Strömungsgeschwindigkeit senkrecht zu der Rotationsachse von 1 % ergibt.

3. Verfahren nach Anspruch 2, **dadurch gekennzeichnet, dass** an der konvexen Seite (5) der Anemometerschalen (1) oder ihrer Haltearme (2) in der Rotationsebene ausgerichtete Widerstandsflächen (13, 14, 16) angebracht werden.

4. Verfahren nach Anspruch 2 oder 3, **dadurch gekennzeichnet, dass** die Widerstand erzeugenden Elemente unter einem Winkel von weniger als 3° zu der Rotationsebene des Schalensterns angestellt werden.

## Claims

1. Method of measuring a flow velocity, particularly of wind, using a cup anemometer which comprises a cup arrangement rotating in a plane of rotation about an axis (4) of rotation and having a plurality of anemometer cups (1), wherein a difference of the coefficients of drag is adjusted between the convex (5) and concave (6) sides of the anemometer cups (1) so that, upon an incident flow having a directional component across the axis (4) of rotation, the cup arrangement is rotated about the axis (4) of rotation at a rotation speed dependent on the flow velocity of the incident flow, wherein the rotation speed is taken as a measure of the flow velocity of the incident flow, and wherein elements generating fluid dynamic drag are provided at the convex sides (5) of the anemometer cups (1) or their supporting arms (2), which, upon an incident flow at slant angles, act as fluid dynamic breaks, **characterized in that** the position and size of the fluid dynamic drag generating elements are selected in such a way that the smaller drag coefficient of the convex sides (5) of the anemometer cups (1) for incident flows at slant angles with regard to the rotation plane of up to at least plus/minus 15 DEG is increased in such a way that the deviation of the flow velocity measured based on the rotation speed from the directional component of the flow velocity perpendicular to the axis of rotation is 2 % at maximum with these slant angles.

2. Method of claim 1, **characterized in that** the position and size of the flow dynamic drag generating elements are selected in such a way that the smaller drag coefficient of the convex sides (5) of the anemometer cups (1) for incident flows at slant angles with regard to the rotation plane of up to at least plus/minus 20 DEG is increased in such a way that the deviation of the flow velocity measured based on the rotation speed from the directional component of the flow velocity perpendicular to the axis of rotation is 1 % at maximum with these slant angles.

3. Method of claim 2, **characterized in that** drag surfaces (13, 14, 16) orientated in the plane of rotation are provided at the convex sides (5) of the anemometer cups (1) or their supporting arms (2).

4. Method of claim 2 or 3, **characterized in that** the drag generating elements are inclined at an angle of less than 3° with regard to the plane of rotation of the cup arrangement.

## Revendications

1. Procédé pour mesurer une vitesse d'écoulement, notamment du vent, avec un anémomètre à coupelles présentant une couronne tournant dans un plan de rotation autour d'un axe de rotation (4) et portant plusieurs coupelles d'anémomètre (1), une différence des coefficients de résistance à l'écoulement entre les faces convexes (5) et concaves (6) des coupelles d'anémomètre (1) étant réglées afin de conférer à la couronne, pour un soufflage avec une direction de composante transversale à l'axe de rotation (4), une vitesse de rotation autour de l'axe de rotation (4), en fonction de la vitesse d'écoulement du soufflage, la vitesse de rotation étant utilisée comme mesure pour la vitesse d'écoulement du soufflage et des éléments générant une résistance dynamique à l'écoulement étant prévus sur les faces convexes (5) des coupelles d'anémomètre (1) ou sur leur bras de support (2) qui agissent comme un frein en dynamique des fluides lors de soufflages sous un angle oblique, **caractérisé en ce que** l'emplacement et la taille des éléments générant une résistance dynamique à l'écoulement sont choisis de façon que le paramètre de résistance à l'écoulement des faces convexes (5) des coupelles d'anémomètre (1) le plus faible soit augmenté jusqu'à au moins plus/moins 15° pour les soufflages sous un angle oblique par rapport au plan de rotation de façon que, pour cet angle oblique, on obtienne un écart maximum de 2% entre la vitesse d'écoulement, mesurée en raison de la vitesse de rotation, et la composante directionnelle de la vitesse d'écoulement perpendiculaire à l'axe de rotation.

2. Procédé selon la revendication 1, **caractérisé en ce que** l'emplacement et la taille des éléments générant une résistance dynamique à l'écoulement sont choisis de façon que le paramètre de résistance à l'écoulement des faces convexes (5) des coupelles d'anémomètre (1) le plus faible soit augmenté jusqu'à, au moins plus/moins 20° pour les soufflages sous un angle oblique par rapport au plan de rotation de façon que, pour cet angle oblique, on obtienne un écart maximum de 1% entre la vitesse d'écoulement, mesurée en raison de la vitesse de rotation, et la composante directionnelle de la vitesse d'écoulement perpendiculaire à l'axe de rotation.

3. Procédé selon la revendication 2, **caractérisé en ce que** des surfaces de traînée (13, 14, 16) sont disposées sur la face convexe (5) des coupelles d'anémomètre (1) ou leur bras de support (2) dans le plan de rotation.

4. Procédé selon la revendication 2 ou 3, **caractérisé en ce que** les éléments générant une résistance dynamique à l'écoulement sont réglés à un angle inférieur à 3° par rapport au plan de rotation de la couronne à coupelles.
